# FASCICULE DE BREVET EUROPEEN

(11) **EP 0 939 355 B1**
(45) Date de publication et mention de la délivrance du brevet: **30.07.2003**
(21) Numéro de dépôt: 99400438.0
(22) Date de dépôt: 23.02.1999
(51) Int. Cl.: G05B 19/042

(54) **Calculateur de pilotage du fonctionnement d'un organe fonctionnel de véhicule automobile**
Betriebsteuerung für eine Funktionsvorrichtungmittel in einem Kraftfahrzeug
operation controller for an operational element in a car

(30) Priorité: 26.02.1998 FR 9802357
(43) Date de publication de la demande: 01.09.1999
(73) Titulaire: AUTOMOBILES PEUGEOT, 75116 Paris (FR); AUTOMOBILES CITROEN, 92200 Neuilly-sur-Seine (FR); Renault s.a.s., 92100 Boulogne Billancourt (FR)
(72) Inventeur: Loubeyre, Yves, 92380 Garches (FR); Abadie, Eric, 78470 St. Remy les Chevreuse (FR); Vaillard, Pierre, 91430 Igny (FR)
(74) Mandataire: Habasque, Etienne Joel Jean-François

(56) Documents cités:
- FR-A- 2 719 919
- PATENT ABSTRACTS OF JAPAN vol. 017, no. 161 (P-1512), 29 mars 1993 & JP 04 324529 A (NEC ENG LTD), 13 novembre 1992

## Description

La présente invention concerne un calculateur de pilotage du fonctionnement d'un organe fonctionnel de véhicule automobile.

Plus particulièrement, l'invention se rapporte à un tel calculateur comportant un ensemble à microprocesseur associé à des moyens de mémorisation de données et adapté pour être raccordé à un outil de téléchargement d'informations de mise à jour des données stockées, lors d'opérations de mise à jour de ce calculateur.

On connaît déjà dans l'état de la technique, par exemple du document FR-A-2 719 919, un calculateur de pilotage de ce type, dans lequel les moyens de mémorisation comprennent :
1) une mémoire non volatile adaptée pour stocker un programme de démarrage du calculateur,
2) une mémoire flash adaptée pour stocker au moins un programme d'application pour l'organe fonctionnel,
3) au moins une mémoire de données, et
4) une mémoire non volatile électriquement programmable adaptée pour stocker des informations d'identification du calculateur et dudit au moins un programme d'application.

Une telle structure de calculateur a été développée pour résoudre les problèmes de mise à jour des différentes données stockées dans les moyens de mémorisation du calculateur.

En effet, il peut être intéressant de pouvoir télécharger dans le calculateur un nouveau programme d'application et/ou de nouvelles données par exemple de calibration afin de modifier le fonctionnement du calculateur de manière à optimiser le contrôle de l'organe fonctionnel à la suite d'améliorations apportées à celui-ci.

On a donc développé dans l'état de la technique, des outils de téléchargement adaptés pour être raccordés par exemple par une ligne de téléchargement, au calculateur, afin d'introduire dans les moyens de mémorisation de données de celui-ci, des informations de mise à jour de celles-ci.

Dans ce cas, le calculateur doit posséder une zone d'identification contenant les paramètres nécessaires d'une part à l'identification du calculateur et d'autre part, à l'identification des données stockées dans les moyens de mémorisation de celui-ci.

Le document FR-A-2 719 924 décrit un procédé de déverrouillage de l'accès de l'outil de téléchargement au calculateur.

Cependant, lors de chaque opération de mise à jour de ce calculateur, les informations de mise à jour introduites dans celui-ci écrasent les données stockées précédemment dans les moyens de mémorisation du calculateur afin de les remplacer.

Le but de l'invention est de proposer un perfectionnement à ce type de calculateur.

A cet effet, l'invention a pour objet un calculateur de pilotage du fonctionnement d'un organe fonctionnel de véhicule automobile, comportant un ensemble à microprocesseur associé à des moyens de mémorisation de données et adapté pour être raccordé à un outil de téléchargement d'informations de mise à jour des données stockées, lors d'opérations de mise à jour du calculateur, caractérisé en ce que les moyens de mémorisation comportent une zone de stockage d'informations relatives à un historique des opérations de mise à jour du calculateur.

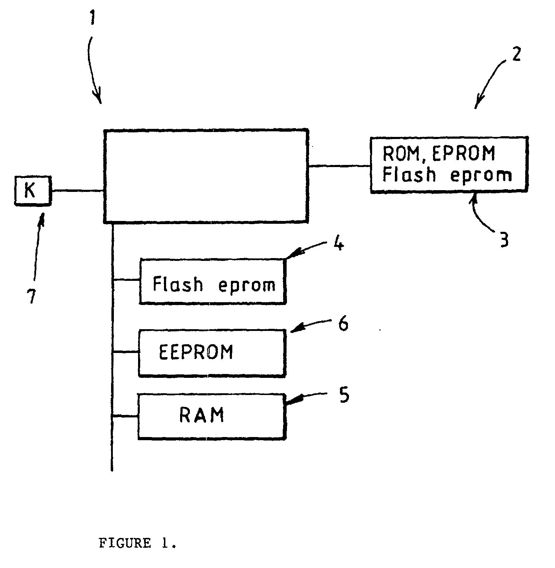

L'invention sera mieux comprise à la lecture de la description qui va suivre, donnée uniquement à titre d'exemple et faite en se référant au dessin annexé qui représente un schéma synoptique illustrant la structure d'un calculateur de pilotage selon l'invention.

On reconnaît sur cette figure, un calculateur de pilotage d'au moins un organe fonctionnel d'un véhicule automobile, du type comportant une unité à microprocesseur désignée par la référence générale 1 associée à des moyens de mémorisation 2.

Ce calculateur peut aussi bien être un calculateur de contrôle du fonctionnement du moteur du véhicule, qu'un calculateur de commande de boîte de vitesses électronique, de contrôle de suspension, de climatisation ou encore d'ordinateur de bord.

Tous ces systèmes embarqués sur véhicule, peuvent en effet présenter une structure basée sur l'emploi d'un microprocesseur ou d'un microcontrôleur associé à des mémoires.

Les moyens de mémorisation 2 comprennent par exemple:
1) une mémoire non volatile 3 adaptée pour stocker un programme de démarrage du calculateur,
2) une mémoire flash 4 adaptée pour stocker au moins un programme d'application pour l'organe fonctionnel,
3) au moins une mémoire de données 5, et
4) une mémoire non volatile électriquement programmable 6 adaptée pour stocker des informations d'identification du calculateur et dudit au moins un programme d'application.

Le calculateur doit en effet contenir un programme de démarrage ou de "BOOT" implanté dans une mémoire non volatile de type EEPROM ou flash paginée du coeur numérique afin de permettre par exemple le lancement d'un téléchargement du programme d'application dans le calculateur.

La mémoire de programme d'application correspond à une zone de stockage du programme qui permet au calculateur électronique d'assurer la fonction pour lequel il a été conçu.

Il inclut aussi bien le programme que les données ainsi que les calibrations.

La mémoire de données 5 est en fait une zone de données correspondant à la place de mémoire nécessaire au traitement des caractères reçus, par exemple sur une ligne de diagnostic du véhicule et au programme de téléchargement de celui-ci.

La mémoire non volatile électriquement programmable 6 de stockage des informations d'identification du calculateur est utilisée dans la mesure où le calculateur doit posséder une zone d'identification contenant les paramètres nécessaires d'une part à l'identification du calculateur et d'autre part, à l'identification du programme d'application.

Pour les calculateurs munis d'une mémoire EEPROM, la zone d'identification est stockée dans cette mémoire afin d'être sauvegardée en permanence, tandis que pour les autres calculateurs, elle est stockée directement dans la mémoire Flash EPROM.

Cette zone d'identification comporte en outre les informations suivantes :

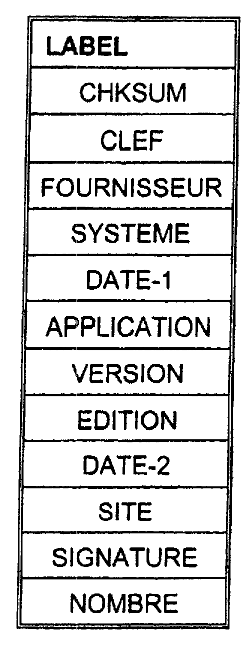

Cette zone d'identification comporte en fait par exemple les zones suivantes :
1) CHKSUM qui correspond à une zone de somme de contrôle de la mémoire Flash après téléchargement du code et cette information peut être donnée sur 16 bits.
   La zone d'identification n'est pas intégrée dans le calcul de la somme de contrôle. Cette zone peut contenir le complément à deux du modulo 65536 de la somme des octets téléchargés.
   Après téléchargement, le calculateur doit calculer sa somme de contrôle qui additionnée à la somme de contrôle de la zone d'identification doit être égale à zéro.
   Cette zone n'est pas nécessaire si d'autres moyens de contrôle sont utilisés.
2) CLEF qui correspond à une zone de clef d'accès au calculateur. Cette information sur 16 bits par exemple, donne la clef d'accès au programme de téléchargement et cette clef est inopérante lorsque sa valeur est égale à zéro.
3) FOURNISSEUR qui correspond à une zone d'identification du fournisseur du calculateur codée par exemple sur 8 bits et qui permet d'identifier celui-ci à partir d'une logique de codage déterminée quelconque.
4) SYSTEME qui correspond à une zone d'identification de la famille du calculateur, c'est à dire la définition du matériel de cette famille, codée par exemple sur 8 bits.
5) DATE-1 qui correspond à une zone d'indication de la date de fabrication du calculateur, par exemple sur trois octets. Le premier octet peut indiquer le jour du mois de fabrication, le second, le mois de l'année, et le troisième, l'année du siècle.
6) APPLICATION qui correspond à une zone d'identification du type d'application, codée par exemple sur 8 bits, auquel est destiné le programme d'application et qui correspond à une version de matériel différente pour un système donné.
7) VERSION qui correspond à une zone d'identification de la version du programme d'application stocké, c'est à dire une information codée sur 8 bits par exemple, qui caractérise la version du logiciel qui fonctionne dans le calculateur.
8) EDITION qui correspond à une zone d'indication de l'état de modification du programme d'application stocké, codée par exemple sur 16 bits. Le poids fort de cette zone peut correspondre à l'état de modification du logiciel, tandis que le poids faible peut correspondre à l'état de modification de la calibration.
   Pour les calculateurs qui n'utilisent pas d'indices de calibration, le poids faible peut être forcé à zéro.
9) DATE-2 qui correspond à une zone d'indication de la date de chargement de la version/Edition du programme d'application stocké. Cette information par exemple sur trois octets identifie la dernière date de programmation ou de reprogrammation de la version/Edition du programme du calculateur. Le codage de cette zone est identique à celui de la zone DATE-1.
10) SITE qui correspond à une zone d'identification du site où s'est produit le premier chargement d'un programme d'application dans la mémoire Flash, qui peut se présenter sous la forme d'une information sur 8 bits, codée de manière déterminée quelconque pour identifier ce site.
11) SIGNATURE qui correspond à une zone d'identification de la signature du site où s'est produit le chargement du programme d'application stocké, codée d'une manière déterminée quelconque sur trois octets pour identifier le lieu de reprogrammation du calculateur, et enfin
12) NOMBRE qui correspond à une zone d'indication du nombre de programmes d'application chargés dans la mémoire Flash, Cette information par exemple sur 8 bits identifie le nombre de programmes d'application qui ont été chargés dans ce calculateur et permet également d'identifier la présence d'un programme d'application.

Cette variable est gérée directement par le calculateur et permet à tout moment de connaître le nombre de programmations réellement effectuées sur le calculateur et permet par exemple d'identifier les programmations faites par des organismes non autorisés.

D'autres moyens de contrôle peuvent être utilisés pour reconnaître de telles programmations frauduleuses comme cela sera décrit plus en détail par la suite.

Afin d'assurer le téléchargement d'un programme d'application dans les meilleures conditions, cette zone d'identification doit être programmée et/ou remise à jour de la manière suivante.

La programmation du calculateur peut en effet être découpée en trois phases distinctes qui sont pour la première, une phase correspond à une fabrication du calculateur associée à une première programmation par le fournisseur de celui-ci, pour la seconde, une phase qui peut être réalisée soit chez le fournisseur du calculateur, soit chez l'utilisateur et qui correspond à la programmation de la première application dans celui-ci, et enfin pour la troisième, une phase qui est réservée au service après-vente pour la gestion des évolutions de logiciel.

Pour la première phase de programmation chez le fournisseur du calculateur, celui-ci doit programmer une partie de la zone d'identification afin d'identifier le produit et ce d'une façon décrite dans le tableau suivant.

Dans ce tableau, les informations codées par le fournisseur sont notées X.

| **LABEL** | **VALEUR** | **REMARQUE** |
|---|---|---|
| CHKSUM | 0 | |
| CLEF | 0 | Autorisation d'écriture |
| FOURNISSEUR | XX | Code du fournisseur |
| SYSTEME | XX | |
| DATE-1 | XXXX | Date de fabrication |
| APPLICATION | XX | |
| VERSION | 0 | |
| EDITION | 0 | |
| DATE-2 | 0 | |
| SITE | FE | |
| SIGNATURE | 0 | |
| NOMBRE | FE | |

Une fois le calculateur livré par exemple chez un fabricant de véhicules automobiles, celui-ci est implanté sur véhicule et la seconde phase de programmation de celui-ci se produit par exemple sur la ligne de montage du véhicule.

Cette seconde phase de programmation permet de mettre en place le programme d'application.

Cette opération est par exemple réalisée par téléchargement de ce programme dans la mémoire correspondante du calculateur, par l'intermédiaire d'une ligne de téléchargement, notée 7 sur la figure. Cette ligne de téléchargement permet de charger au moins un programme d'application dans la mémoire Flash et de remettre à jour la zone d'identification dans la mémoire non volatile électriquement programmable.

Cependant, avant d'effectuer le téléchargement de ce code, l'outil de téléchargement correspondant doit corréler des paramètres de la zone d'identification du calculateur avec des paramètres à implanter et qui correspondent par exemple aux zones de SYSTEME et d'APPLICATION décrites précédemment.

En effet, ces paramètres SYSTEME et APPLICATION du code à implanter doivent être identiques à ceux stockés.

La zone d'identification est alors modifiée de la façon suivante, les modifications opérées lors de cette seconde phase de programmation étant notées Y.

| **LABEL** | **VALEUR** | **REMARQUE** |
|---|---|---|
| CHKSUM | YYYY | |
| CLEF | YYYY | |
| FOURNISSEUR | XX | Code du fournisseur |
| SYSTEME | XX | |
| DATE-1 | XXXXXX | Date de fabrication |
| APPLICATION | XX | |
| VERSION | YY | |
| EDITION | YY | |
| DATE-2 | YYYYYY | |
| SITE | YY | |
| SIGNATURE | 0 | |
| NOMBRE | 01 | Première programmation |

Il est impératif que la procédure de téléchargement modifie la zone d'identification pour la remettre à jour seulement après la transmission de données et le téléchargement du programme.

La troisième phase de programmation, par exemple en service après vente, ne diffère de la précédente que par le fait qu'elle s'effectue sur le véhicule par exemple en service après vente.

Avant d'effectuer le téléchargement du code, l'outil de téléchargement doit corréler certains des paramètres de la zone d'identification avec les paramètres à implanter.

Ces paramètres sont les paramètres de SYSTEME, d'APPLICATION, de VERSION et d'EDITION.

Les paramètres de SYSTEME, d'APPLICATION et de VERSION du code à implanter devront être identiques à ceux correspondants stockés, tandis que le paramètre d'EDITION du code à implanter devra être strictement supérieur au paramètre d'EDITION stocké de la zone d'identification.

Dans le cas de calculateurs de contrôle du fonctionnement des moteurs reliés à un clavier d'antidémarrage codé, il interdit, une fois verrouillé, toute communication avec les lignes de téléchargement, de sorte qu'il est nécessaire de réaliser un déverrouillage préalable du calculateur par ce clavier d'antidémarrage codé.

La troisième phase de programmation se traduit par les modifications suivantes de la zone d'identification (modifications notées Z).

| **LABEL** | **VALEUR** | **REMARQUE** |
|---|---|---|
| CHKSUM | ZZZZ | |
| CLEF | YYYY | |
| FOURNISSEUR | XX | Code du fournisseur |
| SYSTEME | XX | |
| DATE-1 | XXXXXX | Date de fabrication |
| APPLICATION | XX | |
| VERSION | YY | |
| EDITION | ZZ | |
| DATE-2 | ZZZZZZ | |
| SITE | ZZ | |
| SIGNATURE | ZZZZZZ | |
| NOMBRE | ZZ | Incrémentation Z=Y+1 |

Une autre programmation peut également être réalisée lors de l'implantation d'un calculateur de rechange.

Le calculateur ne possédant à l'origine que l'étiquette du fournisseur, une seconde étiquette est adjointe par les services après vente lors de la programmation de ce calculateur de rechange.

Cependant, cette programmation d'un calculateur de rechange ne diffère pas des procédures décrites précédemment et seule la zone d'identification est modifiée, et se présente de la façon suivante (modifications notées W).

| **LABEL** | **VALEUR** | **REMARQUE** |
|---|---|---|
| CHKSUM | WWWW | |
| CLEF | WWWW | |
| FOURNISSEUR | XX | Code du fournisseur |
| SYSTEME | XX | |
| DATE-1 | XXXXXX | Date de fabrication |
| APPLICATION | XX | |
| VERSION | WW | |
| EDITION | WW | |
| DATE-2 | WW | |
| SITE | FD | |
| SIGNATURE | WWWWWW | |
| NOMBRE | O1 | Première programmation |

On conçoit alors que la structure de ce calculateur permet une remise à niveau très simple par exemple du ou des programmes d'application chargés dans celui-ci et une remise à jour de la zone d'identification.

De plus, les moyens de mémorisation 2 de ce calculateur comportent une zone de stockage d'informations relatives à un historique des opérations de mise à jour du calculateur.

Ainsi par exemple, cette zone de stockage des informations relatives à l'historique des opérations de mise à jour peut être prévue dans une mémoire non volatile des moyens de mémorisation 2, cette mémoire non volatile étant formée par exemple par une portion de la mémoire flash des moyens de mémorisation.

Ces informations d'historique comportent alors différentes données permettant de suivre les modifications et les mises à jour successives des données stockées dans les moyens de mémorisation du calculateur, afin par exemple de retracer l'évolution de celui-ci en conservant une trace des différentes configurations de celui-ci dans le temps.

Ces informations d'historique peuvent alors comporter par exemple des informations d'identification du fournisseur du calculateur, des informations d'identification de ce calculateur et des informations d'identification des données stockées dans les moyens de mémorisation.

De plus, ces informations peuvent également comporter des informations de date de mise à jour et des informations d'identification du site où s'est produite cette mise à jour.

Ces différentes informations ont été décrites précédemment et ne seront donc pas reprises en détail.

Bien entendu, d'autres informations peuvent encore être intégrées dans ces informations d'historique.

On conçoit alors que ceci permet de conserver dans le calculateur, une trace des différentes opérations de mise à jour réalisées sur ce calculateur afin de faciliter par exemple la compréhension du fonctionnement et les opérations de maintenance de celui-ci, de même que la détection des manipulations frauduleuses de ce calculateur.

## Revendications

1. Calculateur de pilotage du fonctionnement d'un organe fonctionnel de véhicule automobile, comportant un ensemble à microprocesseur (1) associé à des moyens de mémorisation de données (2) et adapté pour être raccordé à un outil de téléchargement d'informations de mise à jour des données stockées, lors d'opérations de mise à jour du calculateur, **caractérisé en ce que** les moyens de mémorisation (2) comportent une zone de stockage d'informations relatives à un historique des opérations de mise à jour du calculateur.

2. Calculateur selon la revendication 1, **caractérisé en ce que** la zone de stockage des informations d'historique est prévue dans une mémoire non volatile des moyens de mémorisation (2).

3. Calculateur selon la revendication 2, **caractérisé en ce que** la mémoire non volatile est formée par une portion d'une mémoire flash des moyens de mémorisation (2).

4. Calculateur selon l'une quelconque des revendications précédentes, **caractérisé en ce que** les informations relatives à l'historique de mise à jour du calculateur comprennent au moins :
- des informations d'identification du fournisseur du calculateur,
- des informations d'identification du calculateur, et
- des informations d'identification des données stockées dans les moyens de mémorisation.

5. Calculateur selon la revendication 4, **caractérisé en ce que** les informations relatives à l'historique comportent en plus :
- des informations de date de mise à jour, et
- des informations d'identification du site où s'est produite la mise à jour.

## Patentansprüche

1. Rechner zur Steuerung des Betriebs eines Funktionsorgans eines Kraftfahrzeugs, umfassend eine Mikroprozessoreinheit (1), der Mittel (2) zum Speichern von Daten zugeordnet sind und die dafür ausgelegt ist, bei Aktualisierungsoperationen des Rechners an ein Werkzeug zum Herunterladen von Informationen zur Aktualisierung der gespeicherten Daten angeschlossen zu werden, **dadurch gekennzeichnet, daß** die Speichermittel (2) eine Zone zum Speichern von Daten aufweisen, die einen Bericht der Aktualisierungsoperationen des Rechners betreffen.

2. Rechner nach Anspruch 1, **dadurch gekennzeichnet, daß** die Zone zum Speichern der Berichtinformationen in einem nicht flüchtigen Speicher der Speichermittel (2) vorgesehen ist.

3. Rechner nach Anspruch 2, **dadurch gekennzeichnet, daß** der nicht flüchtige Speicher von einem Teil eines Flash-Speichers der Speichermittel (2) gebildet ist.

4. Rechner nach einem der vorhergehenden Ansprüche, **dadurch gekennzeichnet, daß** die den Aktualisierungsbericht des Rechners betreffenden Informationen mindestens umfassen:
- Informationen zur Identifizierung des Lieferanten des Rechners,
- Informationen zur Identifizierung des Rechners und
- Informationen zur Identifizierung der in den Speichermitteln gespeicherten Daten.

5. Rechner nach Anspruch 4, **dadurch gekennzeichnet, daß** die den Bericht betreffenden Informationen außerdem umfassen:
- Informationen über das Aktualisierungsdatum und
- Informationen zur Identifizierung des Standorts, an dem die Aktualisierung stattgefunden hat.

## Claims

1. Operation controller for an operational element in an automotive vehicle, comprising a microprocessor assembly (1) which is associated with data storage means (2) and adapted in order to be connected to an information downloading tool for updating the stored data, during the updating operations of the controller, **characterised in that** the storage means (2) comprise a zone for storing information relating to a log of the updating operations of the controller.

2. Controller according to claim 1, **characterised in that** the zone for storing log information is provided in a non-volatile memory of the storage means (2).

3. Controller according to claim 2, **characterised in that** the non-volatile memory is formed by a portion of a flash memory of the storage means (2).

4. Controller according to any of the preceding claims, **characterised in that** the information relating to the updating log of the controller comprises at least:
- information for identifying the supplier of the controller,
- information for identifying the controller, and
- information for identifying the data stored in the storage means.

5. Controller according to claim 4, **characterised in that** the information relating to the log comprises furthermore:
- information about the date of updating, and
- information for identifying the site where the updating took place.
